# EUROPEAN PATENT APPLICATION

(11) **EP 4 834 273 A1**
(43) Date of publication of application: **04.11.2026**
(21) Application number: 25173298.8
(22) Date of filing: 29.04.2025
(51) Int. Cl.: A61C 7/00, A61C 7/08, A61C 7/14

(54) **CUSTOMIZED MAGNETIC CORRECTION OF IMPACTED TEETH**

(71) Applicant: Meyding, Moritz, 35578 Wetzlar (DE)
(72) Inventor: Meyding, Moritz, 35578 Wetzlar (DE)
(74) Representative: Fuchs Patentanwälte Partnerschaft mbB

(57) **Abstract**

The disclosure concerns, amongst others, an orthodontic arrangement (10), comprising:
• a first magnetic member configured to be attached to an impacted first tooth (14) of a patient and comprising a customized base portion (18) that is shaped to conform to at least a portion of the first tooth (14),
• a removable orthodontic appliance (46) adapted to an anatomy of the patient, and
• a second magnetic member (50) that is attached to the removable orthodontic appliance (46),
wherein the first and second magnetic members (50) are configured to magnetically interact with one another to exert a force on the first tooth (14).

## Description

The disclosure relates to the field of customized magnetic correction of impacted teeth.

### Background

Impacted teeth are those that fail to develop or erupt in their proper position within the jaw, growing in atypical locations, outside the regular dental arch, or remaining embedded in the jawbone. This condition may result from factors such as limited space in the jaw, genetic predisposition or trauma. Left untreated, impacted teeth can cause discomfort, root resorption of adjacent teeth, inflammation, bite misalignment, aesthetic concerns, and challenges with oral hygiene.

The most common treatment involves fixed braces (in other words: brackets fixedly attached the surrounding, non-displaced teeth) combined with a physical connection such as a metallic chain, a wire, or elastics (e.g. a rubber ring) to the displaced tooth. This process begins with surgical exposure of the displaced tooth, where a bracket or button is attached directly to its surface. The chain or wire is then connected to the said bracket or button mechanically, typically by hooking or tying, while being anchored at the fixed first braces (or vice versa). Orthodontists apply controlled forces, as far as possible under the given treatment conditions, to gradually guide the tooth into its correct position by manually tensioning the chain or wire. This method can be time-intensive and uncomfortable for the patient, as it often involves extrusive elements in form of the wires or chains within the mouth. Additionally, the treatment itself does not facilitate a precise and predetermined application of force. Instead, the forces applied are typically adjusted manually through a trial-and-error process and may not always accurately result in a desired tooth movement.

The use of magnets for tooth alignment has also been suggested but has so-far not proven effective for the efficient and patient-friendly treatment of impacted teeth.

For treatments using aligners, additional tools and techniques are necessary to interact with impacted teeth because aligners cannot directly exert forces on such teeth. Unlike traditional braces, aligners lack the infrastructure, such as brackets or wires, to connect directly to a displaced tooth. To address this limitation, a bracket or button is often bonded to the displaced tooth, and chains, wires, or elastics are attached to apply the necessary forces. Because aligners do not anchor these attachments, auxiliary devices such as Temporary Anchorage Devices (TADs) or mini-implants are used to provide stable anchorage points with the oral cavity. This adds complexity to the treatment process and also a need for an additional surgical procedure for implementing TADs or miniscrews. Additionally, these treatments tend to require frequent in-office appointments to adjust force mechanisms like elastic chains, which lose tension over time, further complicating the overall treatment workflow.

### Details of disclosure

The present disclosure is thus directed at the object of improving the guidance and positioning of impacted teeth, in particular with respect to efficiency and predictability of the treatment workflow, tooth guidance accuracy and patient comfort as well as practitioner comfort.

This object is solved by the subject-matters of the independent claims. Advantageous embodiments are set out in this description, in the figures and in the independent claims.

Accordingly, an orthodontic arrangement is suggested, comprising:
- a first magnetic member configured to be attached to an impacted first tooth of a patient, the first magnetic member in particular comprising a patient-specific, or in other words: individualized and/or customized, base portion that is shaped to conform to at least a portion of the first tooth;
- a removable orthodontic appliance, such as a dental aligner, adapted to an anatomy the patient, in particular an oral anatomy; and
- a second magnetic member that is attached to the removable orthodontic appliance,
   wherein the first and second magnetic members are configured to magnetically interact with one another to exert a force on the first tooth.

The removable orthodontic appliance may, in addition or as an alternative to applying forces to the impacted tooth, be configured to exert forces on other teeth to facilitate alignment, correction of malocclusion, or other orthodontic adjustments. The removable characteristic of the appliance may refer to its ability to be detached from the dental arch without surgical intervention and/or without requiring specialized tools. For example, the appliance may be configured to be manually removed by the patient, such as by gripping and pulling or through other manual handling techniques. This removability may allow for intermittent use based on treatment needs and patient comfort. For example, the appliance may be removed for various purposes, including but not limited to eating, oral hygiene maintenance, or for specific treatment adjustments. The removable orthodontic appliance may e.g. be in the form of a dental aligner, a retainer or a palatal plate, or any other removable appliance.

When the removable orthodontic appliance is a dental aligner, said dental aligner may be adapted to a geometry of a plurality of teeth of the patient, said plurality only optionally including the first tooth. For example, at least a portion of the dental aligner may be configured to contact at least some of the teeth out of said plurality for exerting a force, e.g. to correct misalignment or facilitate other orthodontic corrections.

The patient-specific, or in other words: individualized and/or customized, base portion may be complementary shaped to at least a portion of the first tooth in order to conform to its shape. For example, the base portion may be designed to receive a corresponding section of the first tooth, allowing for a precise fit. The complementary shaping may facilitate a form-fitting engagement or, alternatively, a surface contact arrangement where the base portion rests against the first tooth while optionally partially enclosing it. Such configurations may enhance stability and positional accuracy of the first magnetic member while accommodating different attachment approaches.

By conforming to the contours of the first tooth, the base portion may enable close alignment, reducing unintended movement or displacement. The base portion may engage the tooth through a form fit, bonding, or a simple resting contact against a tooth surface that still ensures proper positioning. The defined and stable relative positioning ensures that magnetic forces acting on the first magnetic member are transferred onto the first tooth in a controlled and in particular pre-calculated manner.

As a result, the first tooth may follow a defined movement pattern along a pre-calculated trajectory, allowing for controlled magnetic guidance toward a final target position. The predictability of force transmission may facilitate precise tooth movement, reducing deviations from the planned trajectory and improving treatment efficiency. Additionally, the defined force application may help optimize treatment duration, minimize unwanted secondary tooth movements, and contribute to improved overall treatment accuracy.

Customization of the base portion may, e.g. in addition to a customized angulation and/or position of the first magnetic member, include customizing a length thereof, in particular in a direction pointing away from the first tooth and/or towards the opposite dental arch. This, too, may allow for precise adaptation of magnetic force generation based on the desired or pre-calculated specifications. For example, the length of the base portion may affect a distance between the first and second magnetic members, which is relevant for achieving the intended and pre-determined magnetic force application. Accordingly, the length may determine at least selective coordinates of a position of a below-discussed magnetic portion of the first magnetic member.

The alignment of the first and second magnetic members relative to one another may influence a trajectory of the impacted tooth during its eruption, e.g. ensuring that it follows a digitally pre-planned eruption trajectory. By accurately positioning and orienting the first magnetic member through the customized base, the magnetic interaction remains controlled and predictable, guiding the tooth in accordance with the treatment plan.

The base portion and a magnetic portion, comprising or being a magnet, of the first magnetic member may be made of different materials. For example, the base portion may be non-magnetic and/or non-metallic. For example, the base portion may e.g. comprise or be entirely made of: a metallic material, such as titanium or stainless steel, a ceramic material or a plastic material, such as PEEK, Polyether Ether Ketone. The magnetic portion may e.g. comprise or be entirely made of Samrium-Cobalt of /or Neodym. While the base portion may generally be patient-specific, a magnetic portion of the first magnetic member may not be patient-specific, e.g. may be standardized or pre-determined independently of a patient to be treated and/or independently of the individually required orthodontic treatment. This may simplify manufacture and reduce costs. Further, this may ensure that the magnetic portion has a defined magnetic field, defining a predictable magnetic force generation, which e.g. simplifies digital planning of the treatment as disclosed herein.

Accordingly, the base portion may provide the, in particular only, degree of freedom for adjusting the first magnetic member to a specific orthodontic treatment to be provided to an individual patient. Similar considerations may be valid for the second magnetic member, wherein this entire second magnetic member or at least a magnet thereof may not be patient-specific. Rather, these may be standardized or pre-determined, independently of a patient to be treated and the individually required orthodontic treatment. In connection with the second magnetic member, the removable orthodontic appliance may provide the, in particular only, degree of freedom for adjusting a position and/or orientation of the second magnetic member to a specific orthodontic treatment to be provided to an individual patient.

For example, placing the second magnetic member on a removable orthodontic appliance, such as a dental aligner or another removable device, enables precise and controlled force application. The relative positioning, strength, and polarity of the first and second magnetic members can be pre-calculated to generate forces that guide the impacted tooth along a predetermined trajectory. This relative positioning can be precisely implemented and maintained by the removable orthodontic appliance, which may be stabilized by engagement with multiple teeth or other relatively immobile oral structures, preventing unintended shifts and ensuring consistent force application.

As set out in further detail below, the orthodontic treatment can be flexibly adjusted by periodically replacing the orthodontic appliance. Each successive appliance may incorporate a second magnetic member with a modified position, orientation, or strength, compared to the previous orthodontic appliance, allowing for stepwise adjustments in force application. This staged approach enables controlled eruption and movement of the impacted tooth toward its final target position.

According to a further embodiment, the removable orthodontic appliance, such as a dental aligner, is configured to cover at least a portion of a dental arch of the patient, the dental arch comprising the first tooth. The appliance may at least partially encapsulate the exposed crowns of multiple teeth within the dental arch, providing a stable interface for force application. The coverage of the dental arch may also contribute to the positional stability of the appliance, ensuring that it remains securely in place during wear, thereby also ensuring correct relative positioning of the first and second magnetic members.

Additionally or alternatively, the removable orthodontic appliance may be adjusted to extend along or conform to the palate, e.g. providing additional stabilization and force distribution. In some embodiments, the appliance may be designed as a palatal plate, which may offer reliable anchorage and support for guiding tooth movement. Depending on the specific design, the appliance may be shaped to closely conform to the anatomy of the teeth, gums, and/or palate. Accordingly, it may generally be patient-specific and/or customized.

The first magnetic member can also be described as Individualized Magnetic Attachment, IMA.

According to a further embodiment, the second magnetic member is configured to face the first magnetic member and/or to face at least one surface of the first tooth, such as an incisal or occlusal surface or any other surface, such as a buccal or palatal surface. The first magnetic member may be arranged at said respectively faced surface. The positioning of the second magnetic member relative to the first magnetic member may influence, in particular in a predetermined and/or pre-calculated manner, the direction and effectiveness of the generated magnetic forces, which in turn may determine the movement trajectory of the first tooth. Depending on the treatment plan, the second magnetic member may be aligned to generate attractive or repulsive forces with the first magnetic member, guiding the impacted tooth along a predetermined path. When positioned opposite an incisal or occlusal surface of the first tooth, the second magnetic member may in particular help direct the eruption of the impacted tooth into the dental arch. Alternatively, when placed facing a buccal or palatal surface of the first tooth, the magnetic forces may assist in correcting misalignment in a lateral direction.

According to a further embodiment, the second magnetic member is at least partially exposed, in particular in a region facing the first magnetic member and/or the incisal or occlusal surface of the first tooth or any other surface of the first tooth, such as a buccal or palatal surface. The first magnetic member may be arranged at said respectively faced surface. The exposure of the second magnetic member may facilitate a more direct magnetic interaction with the first magnetic member, ensuring efficient force transmission while minimizing interference from surrounding material. Partial exposure may also allow for a more predictable force application, in particular according to a pre-calculated and/or target force generation, as it reduces potential shielding effects that could arise if the magnetic member were fully embedded within the removable orthodontic appliance. This may help ensure that the generated forces remain consistent and aligned with the intended tooth movement trajectory.

According to a further embodiment, the removable orthodontic appliance, such as a dental aligner, comprises a first recess in which at least a part of the second magnetic member is received. This configuration may help to secure the second magnetic member within the removable orthodontic appliance. The recess may e.g. be dimensioned to at least partially surround and/or encase the second magnetic member and in particular a portion thereof that faces away from the first magnetic member, At least a portion facing the first magnetic member may be left at least partially exposed.

The first recess may be designed to enable a form-fitting connection between the second magnetic member and the removable orthodontic appliance. The first recess may be configured to position and/orient the second magnetic member in a defined and in a particular pre-computed manner, e.g. in accordance with the pre-computed trajectory. Generally, the shape, depth and/or the dimension of the first recess may be selected to position and/orient the second magnetic member as intended and in particular as digitally planned.

In some embodiments, at least one of the first recess and the second magnetic member may comprise a mechanical retention feature for being mechanically secured to the respective other of the first recess and the second magnetic member. The mechanical retention feature may e.g. be an undercut or an interlocking geometry, e.g. allowing the second magnetic member to mechanically engage with and/or be securely held within the first recess, in particular independently of any adhesive. For example, the second magnetic member may be pushed and/or clicked into the first recess which simplifies manufacture of the overall orthodontic arrangement. The second magnetic member may also be easily removed from the removable orthodontic appliance by releasing the mechanical retention, e.g. so that the second magnetic member can re-used.

In some embodiments, the first recess may include a dedicated reservoir for and/or may generally be dimensioned to accommodate an adhesive or bonding agent, allowing for a respectively strong fixation of the second magnetic member in the first recess.

According to a further embodiment, the second magnetic member is attached to and/or rests against a bottom surface of the first recess. The bottom surface may thus act as a stop surface, promoting positional accuracy and/or positional stability. The attachment may be achieved through bonding, such as by using an adhesive. Alternatively, the second magnetic member may rest against the bottom surface of the first recess without being permanently bonded thereto. In such a case, the second magnetic member may, e.g. only, be mechanically retained within the recess through an interference fit, undercut engagement, snap-fit mechanism, or through other mechanical retention connections.

According to a further embodiment, the first recess comprises at least one wall section that is configured to face a side of the second magnetic member oriented toward the oral cavity. This wall section may serve functions, such as providing mechanical support, stabilization, and positional guidance for the second magnetic member within the recess.

According to a further embodiment, the first magnetic member is configured to be attached to an incisal or occlusal surface or to any other surface of the first tooth, respectively. The specific attachment location or area and/or the orientation of the first magnetic member, e.g. an inclination thereof relative to the first tooth, may e.g. be selected and in particular pre-computed based on the desired tooth movement trajectory. Depending on the attachment surface - e.g. whether incisal, occlusal, buccal, or palatal - the base portion of the first magnetic member may be adapted in shape, size, and/or orientation to achieve its desired and in particular pre-computed position and orientation when being attached to said surface.

According to a further embodiment, the first magnetic member comprises the base portion and a magnetic portion supported by the base portion. Similar to above, the base portion may be complementary shaped to a portion of the first tooth to which it is supposed to be attached, in particular wherein the base portion is configured to receive at least a part of the first tooth by comprising a slot or another portion shaped complementary to a least a portion of the first tooth.

According to a further embodiment, the base portion comprises a number of through holes for receiving a dental fixation substance. These through holes, also referred to as retention holes, may allow the dental fixation substance, such as a dental adhesive or dental cement, to flow through and form mechanical interlocks upon curing, thereby enhancing the retention and stability of the first magnetic member on the tooth surface.

According to a further embodiment, the base portion may feature a sandblasted or otherwise roughened and/or microstructured surface, e.g., to further improve adhesion, said surface facing the first tooth. The roughened and/or microstructured surface may increase the surface area available for bonding. It may create micro-retentions that enhance a mechanical interlocking between the base portion and the dental fixation substance. The roughened and/or microstructured surface may thus help to reduce the risk of detachment under functional loads and ensure a long-term stable fixation of the first magnetic member.

According to a further embodiment, the magnetic portion and/or the magnet of the first magnetic member has a non-customized, meaning a non patient-specific and/or standardized shape, in particular a cylindrical or quadrangular shape or any other suitable geometrical shape. Here, similar advantages may be achievable as explained above with respect to a non-customization of the second magnetic member.

According to an embodiment, the second magnetic member (or its magnet) has a non-customized, meaning a non patient-specific and/or standardized shape, in particular a cylindrical or quadrangular shape or any other suitable geometrical shape.

According to an embodiment, the magnetic portion (or magnet) of the first magnetic member can have the same or a similar shape and/or dimensions as the second magnetic member (or its magnet). Alternatively, the magnetic portion (or magnet) of the first magnetic member can have a different shape and/or different dimensions as the second magnetic member (or its magnet). For example, the second magnetic member (or its magnet) can be larger than the magnetic portion (or magnet) of the first magnetic member.

According to a further embodiment, for engaging with a positioning template and/or a scan body the first magnetic member, and in particular its base portion and/or magnetic portion, comprises at least one protrusion or another engagement structure, such as recess. This protrusion or other engagement structure may e.g. serve as a reference point or mechanical interface, e.g. allowing for precise positioning and alignment of the first magnetic member during attachment to the impacted tooth. For example, the engagement structure or protrusion, also referred to as a notch, may be designed to ensure a defined spatial relationship between the base portion and a positioning template or scan body. When interacting with a positioning template, the engagement structure or protrusion may help facilitate accurate placement of the first magnetic member, ensuring that it is bonded in the predetermined position and orientation necessary for effective magnetic interaction with the second magnetic member.

When interacting with a positioning template, the engagement structure or protrusion may act as a rotation-lock mechanism, preventing unintended tilting or shifting of the first magnetic member during attachment. This may be particularly beneficial when the treating practitioner is not directly involved in the treatment planning process, as the positioning template can guide the placement without requiring additional adjustments or manual alignment efforts.

The scan body may e.g. be useful in cases where the impacted tooth is positioned deep within the tissue and cannot be directly scanned. By incorporating a protrusion, the scan body can be securely placed onto the first magnetic member, allowing for reliable detection of the impacted tooth and/or of the base portion in a digital model.

Accordingly, the scan body may ensure that the displaced tooth and/or the attached base portion remain consistently identifiable in the digital workflow, as it provides a fixed reference for position and orientation. This allows for precise tracking of the impacted tooth's movement e.g. based on scanning techniques alone and without the need for repeated radiographic imaging.

The disclosure also concerns a set, comprising:
- at least the base portion of or for a first magnetic member of an orthodontic arrangement according to any of the aspects disclosed herein, but e.g. not including the magnetic portion of the first magnetic member; and
- a positioning template; also referred to as surgical positioning template, wherein the positioning template comprises:
   - a first portion configured to support the base portion when attaching it to the first tooth, e.g. by resting against it or by directly physically contacting it;
   - at least one second portion that is rigidly connected to first portion, e.g. so as to be immovable relative thereto under treatment conditions, and that has a shape complementary to at least one further tooth of the patient, in particular a further tooth of the dental arch comprising the first tooth and/or a tooth directly adjacent to said first tooth in a common dental arch, such that the second portion is arrangeable in a predetermined manner relative to the further tooth.

The first portion may be shaped to receive and hold the first magnetic member in a defined position, preventing unintended movement during bonding. It may include features such as a recess or a form-fitting structure that ensures a stable engagement with the first magnetic member. This may help maintain the correct spatial orientation of the magnet, ensuring that the generated forces act in the intended direction.

The second portion may allow the template to be positioned in a predetermined manner relative to the further and/or first tooth, providing additional stabilization and preventing displacement during use. The further tooth used for positioning may be a directly adjacent tooth to the first tooth or another structurally suitable tooth within the dental arch.

The positioning template may be patient-specific and/or customized. In some embodiments, the template may include multiple second portions, engaging with more than one additional tooth to further enhance stability, or the second portion may be configured to engage with a plurality of further teeth of the patient, other than the first tooth, in particular at least the two further tooth adjacent to the first tooth and e.g. enclosing the first tooth in between them.

The positioning template may e.g. be produced using 3D printing or milling techniques, allowing for patient-specific adaptation, in particular based on a previously generated virtual model of the patient's oral anatomy.

By providing a precise reference for placement, the positioning template may help simplify the clinical procedure and enhance the reproducibility of the e.g. digitally planned attachment process, thereby ensuring effective orthodontic force application. For example, a surgeon may be enabled to accurately place the first magnetic member by means of the template without a need for detailed orthodontic expertise or involvement in the orthodontic treatment planning.

In the following, further aspects of this disclosure are discussed. It is to be understood that any explanations, embodiments or variants of features disclosed in connection with the orthodontic arrangement also apply to same or similar features of the below aspects. This also includes aspects concerning methods.

The disclosure also concerns an orthodontic appliance system, comprising:
- a removable orthodontic appliance adapted to an anatomy of a patient, in particular an oral anatomy, such as a geometry of a plurality of teeth, wherein optionally at least a portion of the removable orthodontic appliance is configured to contact said teeth for exerting force,
- a magnetic member that is attached to the removable orthodontic appliance, e.g. a second magnetic member according to any of the examples disclosed herein.

The disclosure also concerns a set, comprising a plurality of orthodontic appliance systems according to the previous aspect, these orthodontic appliance systems in particular being configured for being applied successively during eruption of the first tooth, and a first magnetic member configured to be attached to an impacted tooth of a patient, the first magnetic member in particular comprising a patient-specific, or in other words: individualized and/or customized, base portion that is shaped to conform to at least a portion of the first tooth; wherein the first magnetic member and the second magnetic member of each orthodontic appliance system are configured to magnetically interact with one another to exert a force on the first tooth.

The orthodontic appliance systems of this set may be different from another at least with respect to their second magnetic members, in particular in terms of their positioning and/or orientation and/or magnetic strength. There may e.g. be between at least 2 and at most 50 orthodontic appliance systems in this set, in particular between at least 2 and at most 25. The set may generally be configured for the orthodontic treatment of a specified first tooth that is impacted, the orthodontic treatment e.g. covering and in particular affecting and guiding at least part of the eruption process of this first tooth.

The plurality of orthodontic appliance systems and in particular their successive application may enable a stepwise adjustment of the magnetic force generation as the impacted tooth gradually erupts and moves along a predefined trajectory. Each successive orthodontic appliance system may feature a modified second magnetic member, allowing for precise control of the direction and magnitude of the applied forces at different treatment stages. The modifications may include variations in the positioning, orientation, and/or magnetic strength of the second magnetic member to accommodate the changing position of the first tooth and maintain optimal force transmission. In other words, by sequentially employing the plurality of orthodontic appliance systems with gradually adjusted second magnetic members, the treatment may allow for a controlled and predictable eruption process, reducing the risk of undesired secondary movements. Furthermore, this strategy may reduce the need for manual adjustments or additional interventions by enabling a pre-planned, sequence of aligners or appliances that reliably guide the impacted tooth toward its final target position.

The disclosure also concerns a magnetic member for attaching to an impacted tooth, the magnetic member comprising a base portion and a magnetic portion, e.g. comprising or consisting of a magnet, supported by the base portion, wherein the base portion is complementary shaped to a portion of the impacted tooth to which it is supposed to be attached and/or wherein the base portion is shaped to conform to at least a portion of said first impacted tooth. This magnetic member may be a first magnetic member according to any of the examples disclosed herein.

The disclosure also concerns a positioning template, e.g. referred to as surgical positioning template, comprising:
- a first portion configured to support a first magnetic member, in particular of an orthodontic arrangement according to any of the aspects disclosed herein, when attaching it to an impacted tooth and/or to support at least the base portion of or for such a first magnetic member;
- at least one second portion that is rigidly connected to the first portion and that has a shape complementary to at least one further tooth of the patient, such that it is arrangeable in a predetermined manner relative to the further tooth and in particular also relative to the impacted tooth.

The disclosure also concerns a method for manufacturing a magnetic member for attaching to an impacted tooth, the magnetic member comprising a base portion and a magnetic portion supported by the base portion, wherein the method comprises: providing the base portion with a complementary shape to a portion of the impacted tooth and/or with a shape to conform to at least a portion of said first impacted tooth, in particular based on and/or in accordance with a captured and/or virtually modelled oral anatomy of the patient.

The disclosure also concerns a method for manufacturing a removable orthodontic appliance, wherein the removable orthodontic appliance is adapted to a patient's anatomy, in particular an oral anatomy, such as the geometry of a plurality of teeth of a dental arch and wherein at least a portion of the removable orthodontic appliance is configured to contact the teeth for exerting force, wherein the method comprises: attaching a magnetic member to the removable orthodontic appliance, e.g. a second magnetic member according to any of the above examples, so that the magnetic member faces towards the dental arch, and e.g. towards incisal or occlusal faces or any other teeth faces of said dental arch.

Any methods for manufacturing disclosed herein, e.g. methods for manufacturing any of the first magnetic member, removable orthodontic appliance, or positioning template, may be based on or include a step of generating a virtual model of a patient's oral anatomy, e.g. including at least one of the impacted tooth, adjacent teeth, and surrounding bone structures. The virtual model may e.g. be generated based on a first dataset, e.g. a three-dimensional image dataset of the patient's oral anatomy, the first dataset in particular being captured using cone beam computed tomography (CBCT) and/or intraoral scanning. This capturing may form a dedicated step of any of the methods for manufacturing disclosed herein.

Moreover, according to another aspect, a method is disclosed for planning and/or supporting correction of an impacted tooth and/or for determining an attachment area and/or an orientation for a first magnetic member according to any disclosed example, the first magnetic member e.g. being comprised by an orthodontic arrangement according to any disclosed example. The method in particular being computer-implemented. The method comprises:
- generating a virtual model of at least part of a patient's oral anatomy, e.g. including at least one of an impacted first tooth, adjacent teeth, and surrounding bone structures;
- determining a planned movement trajectory for the impacted first tooth, the trajectory being based at least on the initial position of the impacted first tooth and a predefined final target position of the impacted first tooth;
- determining an attachment area and an orientation for a first magnetic member based on the planned movement trajectory and optionally manufacturing the first magnetic member and in particular a base portion thereof, so as to be attachable and/or orientable as determined.
- The latter may in particular include: designing a base portion of the first magnetic member, the base portion being shaped to conform to at least a portion of the impacted tooth in accordance with and/or when assuming the determined attachment area and orientation.

In addition or according to another aspect, a method is disclosed for planning and/or supporting correction of an impacted tooth and/or for determining an attachment area and/or an orientation for a first magnetic member according to any disclosed example, the first magnetic member e.g. being comprised by an orthodontic arrangement according to any disclosed example. The method in particular being computer-implemented.

The method can comprise:
- Providing a first data set with information on anatomical structures of a patient's mouth at least in an area of an impacted first tooth, such as teeth, gums, and/or other oral structures. The first data set can comprise image data, such as a digital image or a 3D digital image. In other words, the first data set can be an image data set. The first data set can comprise information obtained by an intraoral scan.
- Providing a second data set with additional information on anatomical structures of a patient's mouth at least in the area of the impacted first tooth, such as teeth, gums, bones, and/or other oral structures. The second data set can comprise X-ray image data, such as X-ray images or 3D X-ray images. In other words, the second data set can be an X-ray image data set. The second data set can be obtained by Cone Beam Computed Tomography (CBCT).
The information of the first data set and the information of the second data set can at least partially overlap with regard to the anatomical structures of a patient's mouth. Preferably the first data set contains information on a larger area of a patient's mouth than the second data set. For example, the second data set can be a CBCT-Scan of only few selected teeth and/or a selected sub-area of the patient's mouth.

The method can further comprise:
- Matching the first data set and the second data set, more precisely the information of the first data set and the additional information of the second data set, to generate a third data set with information on the impacted first tooth in relation to other anatomical structures of a patient's mouth, such as other teeth, gums, or bones. In other words, the third data set can be a virtual model of at least part of a patient's oral anatomy, e.g. including at least one of an impacted first tooth, adjacent teeth, and surrounding bone and/or gum structures. For example, the third data set can comprise information on a location, angulation, orientation, size, contour, shape and/or extension of the impacted first tooth in relation to other anatomical structures of a patient's mouth.
- Based on at least the third data set,
   o determining at least one starting point of a correction process for correcting the impacted first tooth, the at least one starting point being linked or related to the impacted first tooth, such as to a location, angulation, orientation, size, contour, shape and/or extension of the impacted first tooth,
   o determining at least one intended end point of a correction process for correcting the impacted first tooth, the at least one intended end point being linked or related to the impacted first tooth, such as to a location, angulation, orientation, size, contour, shape and/or extension of the impacted first tooth.
   A plurality of starting points and/or a plurality of intended end points can be determined, e.g., various starting points and/or a various intended end points each linked to a different contour or volume section of the first impacted tooth, to define an initial position, orientation, location, extension and/or angulation and an intended final target position, orientation, location, extension and/or angulation of the impacted first tooth.
- Based on at least the third data set and based on the determined starting point and the determined intended end point,
   o calculating a planned movement trajectory for the impacted first tooth between the determined starting point to the determined intended end point. The planned movement trajectory can include or exclude the determined starting point and/or the determined intended end point. The planned movement trajectory can allow for controlled magnetic guidance of the impacted first tooth toward the final target position, location, orientation.
      The planned movement trajectory can be calculated under consideration of or depending on one or more parameters of the group comprising:
         ▪ neighboring teeth of the impacted first tooth, including direct and/or indirect neighboring teeth,
         ▪ roots of neighboring teeth of the impacted first tooth, including roots of direct and/or indirect neighboring teeth,
         ▪ other anatomical structures of the patient's mouth, such as nerves or blood vessels,
         ▪ occlusion of the jaw of the impacted first tooth to the opposing jaw,
         ▪ aesthetics,
         ▪ bone resistance,
         ▪ others.
      Under consideration of the one or more parameters, the planned movement trajectory can differ, at least partially, from the quickest and/or shortest path between the at least one starting point and at least one the intended end point. For example, parts of the planned movement trajectory can correspond with the quickest and/or shortest path while others differ therefrom. Parts of the planned movement trajectory can be transverse and/or opposed to the quickest and/or shortest path.

The method can further comprise:
- Determining an attachment area on the impacted first tooth for attaching a first magnetic member to a surface of the impacted first tooth. It will be understood that for attaching the first magnetic member to the impacted first tooth, the respective surface portion of the impacted first tooth is to be exposed by a practitioner, more precisely surgically exposed. Hence, the attachment area can be determined under consideration of surgical constraints regarding the exposure of the attachment area.
- Determining a first magnetic member or at least a base portion of the first magnetic member. More precisely, this can be determining a location, orientation, extension, angulation, dimension, shape and/or geometry of the first magnetic member or at least of the base portion of the first magnetic member. The first magnetic member can be of the type described above. Determining the first magnetic member or at least the base portion of the first magnetic member can comprise:
   o Designing a virtual model of an attachment portion of the base portion of the first magnetic member which is to be attached to the attachment area on the impacted first tooth. The attachment portion of the base portion can be at least partially or fully complementary to the attachment area on the impacted first tooth. Hence, the attachment area on the impacted first tooth can be individualized or customized.
   o Designing a virtual model of the location, orientation, extension, angulation, dimension, shape and/or geometry of the first magnetic member or at least of the base portion of the first magnetic member.
   o Designing a virtual model of the orientation, extension, angulation, dimension, shape and/or geometry of the base portion of the first magnetic member under consideration of a, optionally standardized, magnet of first magnetic member so as to determine the location, orientation, extension, angulation, dimension, shape and/or geometry of the magnet.

The steps of calculating the planned movement trajectory and determining an attachment area and first magnetic member can be performed dependent on each other, wherein in one embodiment the planned movement trajectory can be calculated based on the determined attachment area and first magnetic member, wherein in another embodiment the attachment area and first magnetic member can be determined based on the calculated planned movement trajectory, or in another embodiment a combination thereof.

The method can further comprise:
- Determining a plurality of stages along the planned movement trajectory. This can be done by dividing the planned movement trajectory into various stages. The number of stages can be determined based on the overall distance of the planned movement trajectory and a movable distance of the impacted first tooth per stage. The movable distance of the impacted first tooth per stage can be calculated based on or in mutual dependence with
   o the determined location, orientation, extension, angulation, dimension, shape and/or geometry of the magnet of the first magnetic member,
   o a second magnetic member attached to a removable orthodontic appliance, such as a predefined initial distance and orientation between a magnet of the second magnetic member and the magnet of the first magnetic member, which predefined initial distance is overcome during a stage of the correction process due to the magnetic forces that lead to movement of the impacted first tooth along the planned movement trajectory,
   o force of the magnet of the first magnetic member and/or force of the second magnetic member and/or attraction between the two magnets, wherein attraction can be between 0.1 N and 2.0 N, or between 0.12 N and 1 N or between 0.15 N and 0.8 N, or between 0.19 N and 0.75 N, or wherein attraction can be at least 0.1 N, or at least 0.12 N, or at least 0.15 N, or at least 0.19 N, or wherein attraction can be 2.0 N or less, or 1.0 N or less, or 0.8 N or less, or 0.75 N or less.

The method can comprise:
- Determining a number of removable orthodontic appliances based on the number of determined stages, such as one removable appliance for each stage.
- Designing at least one removable orthodontic appliance for each stage, including determining a location, orientation, extension, angulation, dimension, shape and/or geometry of a second magnetic member on the at least one removable appliance, depending on the determined first magnetic member and the planned movement trajectory. The first second member and/or the removable orthodontic appliance can be of the type described above. Determining the second magnetic member on the removable orthodontic appliance can comprise:
   o Designing a virtual model of the removable orthodontic appliance comprising the second magnetic member.
   o Designing a virtual model of the location, orientation, extension, angulation, dimension, shape and/or geometry of the second magnetic member.
   o Designing a virtual model of the orientation, extension, angulation, dimension, shape and/or geometry of the second magnetic member under consideration of a, optionally standardized, magnet of second magnetic member so as to determine the location, orientation, extension, angulation, dimension, shape and/or geometry of the magnet.

The method can comprise:
- Generating a trajectory data set comprising information on the planned movement trajectory and at least part of a patient's oral anatomy, e.g. the information of the third data set. The trajectory data set can comprise a virtual model and/or image of the planned movement trajectory and at least part of a patient's oral anatomy. The trajectory data set can for example be provided to practitioners.
- Generating a (customized) base data set comprising information on the customized base of the first magnetic member, such as information on the features and parameters described above in the context of the step of "Determining a first magnetic member or at least a base portion of the first magnetic member". The customized base data set can be generated as a STL-file (stereolithography date or stereolithography file) comprising all information for manufacturing the base of the first magnetic member. The customized base data set can for example be provided to a dental technician.
- Generating a (customized) first magnetic member data set comprising information on the first magnetic member, including the base and the magnet, such as information on the features and parameters described above in the context of the step of "Determining a first magnetic member or at least a base portion of the first magnetic member". The customized first magnetic member data set can be generated as a STL-file (stereolithography date or stereolithography file) comprising all information for manufacturing the first magnetic member. The customized first magnetic member data set can for example be provided to a dental technician.
The (customized) first magnetic member data set can further be used as complementary model for designing and/or manufacturing a positioning template for a positioning the first magnetic member during securing it to the impacted tooth.
- Generating a removable orthodontic appliance data set with data for designing a removable orthodontic appliance having the second magnetic member for each determined stage. The removable orthodontic appliance data set can be generated as a STL-file (stereolithography date or stereolithography file) comprising all information for manufacturing the removable orthodontic appliance/s. The removable orthodontic appliance data set can for example be provided to a dental technician and/or to a practitioner.

The method can comprise:
- Generating a positioning template for a positioning the first magnetic member during securing it to the impacted tooth based on the determined first magnetic member.

The described steps and features of the method can be performed in the described order or a fully or partially different order.

Further, an orthodontic method is disclosed, comprising:
- surgically exposing an impacted first tooth of a patient, e.g. by removing overlying gingival tissue and/or bone;
- positioning a first magnetic member on the impacted tooth, in particular in accordance with a predetermined attachment area and/or orientation;
- securing the first magnetic member to the impacted tooth, e.g. using an adhesive, dental cement, or another fixation method;
- optionally: using a positioning template for a positioning of the first magnetic member during securing it to the impacted tooth.

This orthodontic method may further include:
- positioning a removable orthodontic appliance in the patient's oral cavity, the appliance e.g. configured to at least partially cover a dental arch of the patient; wherein a second magnetic member is arranged at the removable orthodontic appliance in a predefined position and with a predefined orientation relative to the first magnetic member to generate a magnetic force for guiding the impacted tooth along the planned movement trajectory.

Additionally, or alternatively, the orthodontic method may further include:
- replacing the removable orthodontic appliance at least once during treatment with another removable orthodontic appliance, wherein the position, orientation, and/or magnetic strength of the second magnetic member in the other removable orthodontic appliance is adjusted to maintain or adjust the magnetic force acting on the first magnetic member during eruption of the first tooth.

### Description of the Figures

Exemplary embodiments are discussed here below with respect to the attached schematic Figures. Same features may be referenced with same reference signs throughout the Figures.
- Fig. 1:: is a flow diagram of a method according to this disclosure.
- Fig. 2:: shows, as an intermediate state of the method of Fig. 1, the manufacturing of parts of an orthodontic arrangement according to an embodiment of this disclosure.
- Fig. 3:: shows, as another intermediate state of the method of Fig. 1, applying part of the orthodontic arrangement to a patient.
- Fig. 4:: shows, as another intermediate state of the method of Fig. 1, the orthodontic arrangement when readily applied to a patient.
- Fig. 5:: shows, as another intermediate state of the method of Fig. 1, part of the orthodontic arrangement during computer assisted planning.
- Fig. 6:: shows, as another intermediate state of the method of Fig. 1, part of the orthodontic arrangement during computer assisted planning in another view compared to Fig. 5.
- Fig. 7:: shows, as another intermediate state of the method of Fig. 1, part of the orthodontic arrangement during computer assisted planning in another view compared to Figs. 5 and 6.
- Fig. 8:: shows, as another intermediate state of the method of Fig. 1, parts of the orthodontic arrangement and positioning template during computer assisted planning.
- Fig. 9:: shows, as another intermediate state of the method of Fig. 1, parts of the orthodontic arrangement and positioning template during computer assisted planning in another view compared to Fig. 8.

### Examples

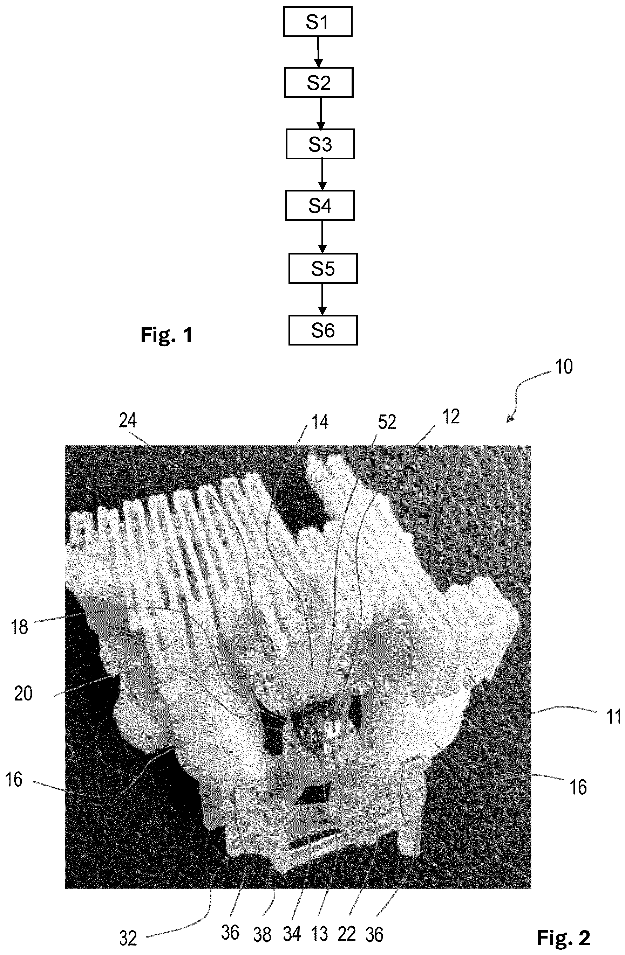

Fig. 1 is a flow diagram of a method according to this disclosure, for example a computer-implemented method. The method includes measures of determining physiological features of a patient to be treated, an individualized manufacturing of at least part of an orthodontic arrangement and applying said orthodontic arrangement to the patient.

In Step S1, the process begins with a diagnostic phase, where the patient undergoes e.g. Cone Beam Computed Tomography (CBCT) or another suitable technology to capture detailed 3D images of the impacted tooth and surrounding areas. In this embodiment, CBCT and intraoral scanning are both performed and the respectively generated datasets are matched to complement one another. The resulting 3D datasets and in particular 3D images are processed to generate a virtual model of the anatomy of the impacted tooth, bone, jaw and typically of several adjacent teeth of the dental arch. This allows for precisely planning a surgical exposure zone and an intended trajectory for the impacted tooth's movement in order to properly align it within the dental arch.

Further, this enables determining an area of the impacted tooth to which a first magnetic member of an orthodontic arrangement according to an embodiment of this disclosure is to be attached. Further, the spatial orientation of the first magnetic member can be determined. The mentioned area and spatial orientation are determined based on the desired trajectory for the impacted tooth's movement.

For example, the final target position of the tooth is determined based on an ideal dental setup, reflecting the desired tooth alignment within the jaw and dental arch. Given the initial tooth position, a trajectory to achieve the final target position may be computed, e.g. automatically and/or in a computer-implemented manner based on the generated virtual model of the patient's anatomy. This trajectory can be influenced by distances between the below-discussed magnetic members of the orthodontic arrangement, ensuring effective force application (e.g., a distance in form of a minimum 1 mm gap).

The trajectory or, in other words: the movement path, between the initial position and the final target position might not be ideal or fully predictable, as certain types of tooth movements are not feasible and/or predictable in a straightforward manner. The calculation and definition of the trajectory may consider multiple factors, including the roots of adjacent teeth, bone resistance, occlusion, gingival constraints, esthetics, an applied magnetic force to improve prediction accuracy. For calculation purposes, it may be assumed that the magnets generate a linear force when precisely aligned.

The above-mentioned attachment area for and/or spatial orientation of the first magnetic member at the tooth may be determined based on the desired trajectory for the impacted tooth's movement. For example, the attachment area of the first magnet at the tooth may include and e.g. be centered around the intersection of the calculated trajectory with the initial tooth position. An orientation of the first magnet may e.g. be chosen in such a way that a magnetic force, in particular the idealized linear magnetic force, is directed along the movement path. Again, said position and orientation may be computed, e.g. automatically and/or in a computer-implemented manner, based on the generated virtual model, while the actual magnet placement may be done by a clinician or dental technician. In this process, the virtual model including and in particular displaying the determined first magnet position and orientation may act as a visual guide.

The second magnetic member may not be treated as a free variable in the present embodiment. Instead, its placement may be determined retrospectively, e.g. again based on the virtual model, based on a calculated position and orientation of the first magnet. Typically, a gap (e.g., 1 mm) to maintain a distance to the first magnetic member may be maintained when positioning the second magnetic member.

In the presently disclosed example, the determined attachment area comprises at least a portion of an incisal edge of an impacted front tooth, see Figures 2-4 and their below discussion.

In Step S2, the design of a first magnetic member is undertaken using e.g. computer-aided design (CAD) or another suitable modelling software and based on the virtual model of the patient's oral anatomy. This involves adjusting the geometry of a base portion of the first magnetic member to a geometry of the determined attachment area of the impacted tooth, in particular while considering the attachment area and/or orientation of the first magnetic member determined in S1 above. Accordingly, a computer model used and/or generated by the software comprises the virtual model of the patient's anatomy determined in step S1 or a virtual model similar thereto. Further, it comprises a model of at least the base portion of the first magnetic member. This base portion is thus individualized to the patient's anatomy.

Specifically, during the designing of step S2, the geometry is adjusted so that an area of the base portion that faces and is supposed to be attached to the impacted tooth matches the geometry of determined attachment area, i.e. is complementary shaped thereto to produce a tight and precise fit. The latter may take spatial requirements of additional components into account, e.g. a gap, such as 20µm to 80 µm gap, for receiving a dental fixation substance to fix the base portion to the first tooth.

Accordingly, the base portion is tailored to bond securely to the determined area of the impacted tooth in a form-fitting manner while being orientated so as to enable the desired tooth movement along the trajectory determined in step S1.

In the presently considered example, the base portion is designed with a slot-like recess so that it can receive and enclose a portion to the impacted tooth's incisal edge, see Figures 2-4 and their below discussion. In particular when positioned at a different tooth and/or at a different part of a tooth other than a incisal edge, the base portion may comprise no or differently configured recesses.

In Step S3, the first magnetic member comprising the finalized design of the base portion is fabricated. Typically, the CAD model of at least the base portion of the first magnetic member having the design developed in step S2 is converted into an STL file, which is used to produce the first magnetic member or at least its base portion. For example, the STL file can be used for a machining a metallic volume, e.g. a titanium block, to produce at least the base portion having the designed shape. This way of fabrication is non-limiting and possible alternatives e.g. include 3D printing or some other generative manufacturing technology, as well as precision casting techniques.

To the manufactured base portion, a magnet, e.g. a standardized and/or industrially available magnet, can be attached e.g. by adhesion or welding, in particular laser welding. Alternatively, a snap-in connection or other mechanical interference fit may be produced between the base portion and magnet. The magnet may resemble a magnetic portion of the first magnetic member.

The base portion may comprise a dedicated receiving portion for this magnet that e.g. has a complementary shape as at least a part of the magnet and/or a shape suitable for producing a form fit with at least a part of the magnet. The receiving portion may be positioned and/or oriented so that the magnet may generate - e.g. idealized linear - magnetic forces in a predetermined direction. Optionally, the position and/or orientation of the receiving portion may be an adjustable parameter - or in other words a degree of freedom - in the design stage of step S2. Form the above, it is evident that the base portion and magnet of the first magnetic member may be made of different materials, especially with the base portion optionally being non-magnetic.

It is noted that based on the available virtual model and information derived based thereon, e.g. the desired trajectory, at least parts of a removable orthodontic appliance discussed below may be manufactured, too.

In Step S4, the impacted tooth is surgically exposed by removing the overlying gum or bone. The manufactured first magnetic member is then bonded to the exposed crown of the tooth using dental adhesive, a dental cement or the like. To assist in the correct positioning of the first magnetic member during said attachment, a positioning template according to this disclosure is used. It holds the first magnetic member in a defined position relative to the first tooth until bonding is completed.

In Step S5, a dental aligner as an exemplary removable orthodontic appliance is applied to the patient and is arranged at the dental arch that comprises the first tooth. As discussed further below, the dental aligner comprises a second magnetic member that is configured to magnetically interact with the first magnetic member. This second magnetic member may be arranged at the dental aligner before applying it to the patient. Alternatively, it may be coupled and in particular adhered or otherwise attached to the dental aligner after said dental aligner has already been applied to the patient. According to one embodiment, this includes adding an aligner portion comprising the second magnetic member to a portion already held at and/or already encapsulating at least part of the teeth of the dental arch. This may allow for precisely adjusting the position and/or orientation of the second magnetic member relative to the already present first magnetic member in situ. For example, a spacer member creating a defined distance of e.g. 0,5 mm to 3 mm, in particular 1 mm to 2mm, may be temporarily placed between the first magnetic member and the second magnetic member until adhesion is completed.

For arranging the second magnetic member at the dental aligner before applying it to the patient, in particular the following two exemplary methods exist: In a direct method, all relevant pre-calculated virtual models, e.g. of at least the base portion of the first magnetic member, the removable orthodontic appliance and/or optionally of the trajectory leading to the final target position, are determined in advance. STL datasets of said virtual models can be exported and used for subsequently 3D-printing the respectively modelled objects. This may also allow for directly manufacturing printed aligners or other removable appliances to which the second magnetic member may be attached. For example, the second magnetic member may be inserted (e.g., as a snap-in component) after printing.

In an indirect method, the base portion and a standardized magnetic member are available and/or designed ahead and are placed at the first tooth. Following this, an intraoral scan of the patient is performed, e.g. using a spacer or a magnetic scan body with the second magnetic member. This scan automatically generates the dataset for the next trajectory model. Based on this model, the subsequent steps, including staging and trajectory adjustments, can be planned. These datasets can also be exported, allowing the second magnetic member to be inserted later in the process.

During step S6, the thus completed orthodontic arrangement is left in the patient's mouth for several days and/or weeks. During said time, the magnetic forces generated by the magnetic interaction of the first and second magnetic members guides a movement of the initially impacted first tooth while its eruption progresses.

The dental aligner or other removable appliance may be frequently replaced during eruption of the teeth and its movement towards the final target position. For example, steps S5 and S6 may be repeated at least once and at least in terms of providing a new dental aligner or other removable appliance comprising a respectively new second magnetic member. This may include any of the above-discussed methods for positioning the new second magnetic member in said new dental aligner or other removable appliance. Such a replacement may help to restore a minimum distance between the first and second magnetic members and/or guide the tooth along the desired trajectory as the eruption of the tooth progresses, e.g. by adjusting the direction of generated magnetic forces as needed.

In Step S7, once the impacted tooth has been repositioned into its desired location, i.e. its final target position, and/or orientation within the dental arch, a currently used orthodontic arrangement its removed. Following that, a common aligner or another common orthodontic arrangement may be used to fine tune and/or finalize the positioning of the first tooth.

In summary, the method enables that a controlled eruption of an impacted tooth can be digitally pre-planned and precisely transferred into reality using the described orthodontic arrangement. The customized or partially complementary base portion helps to ensure that the first magnetic member is positioned in accordance with the digital treatment plan and computed eruption trajectory. More specifically, by defining the placement and orientation of the first magnetic member, the customized base allows for the planned force application to be accurately replicated in the patient's mouth, facilitating predictable and controlled tooth movement as digitally pre-planned.

The positioning template enables a direct and accurate transfer of the digital plan into the clinical setting. The positioning template serves as a guiding structure that ensures that the first magnetic member is attached in the position and orientation determined in the digital planning stage. This eliminates variability in placement and helps maintain consistency between the planned and actual treatment execution. By thus enabling a one-to-one implementation of the digital model, the positioning template ensures that the orthodontic forces act as intended, improving treatment precision and reducing the need for manual adjustments and orthodontic expertise of a surgeon.

Figure 2 illustrates part of an orthodontic arrangement 10, wherein said orthodontic arrangement 10 can be used to perform the method of Figure 1. Specifically, a stage following the above-discussed step S3 is shown in which a first magnetic member 12 has been manufactured. As an optional feature, an anatomic 3D-printed-model 11 is shown, e.g. to verify that the manufactured first magnetic member 12 matches the patient's anatomy as intended. Said model 11 models a section of the patient's anatomy and specifically of one its dental arches comprising an impacted tooth 14. It is stressed that such a real-world model 11 is only optional and that virtual models may be sufficient to implement the disclosed method.

Figure 2 does not specifically illustrate a gum level. Yet, apart from the impacted tooth 14, which lies fully below the gum level, the directly adjacent teeth 16 as well as any remaining teeth of the dental arch have already fully erupted.

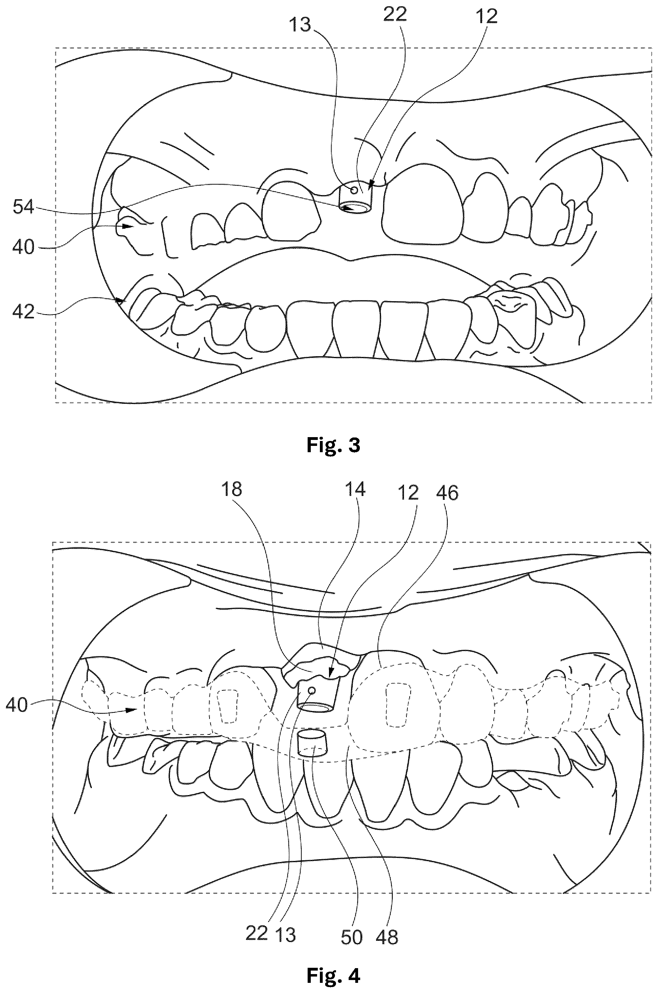

The first magnetic member 12 has a base portion 18, optionally comprising a number of through holes 20 acting as channels for the dental adhesive and/or dental cement. The base portion 18 directly attaches to the first tooth in a previously discussed predetermined position. The base portion 18 helps to appropriately orient a magnetic portion 22 of the first magnetic member 12, so that forces acting on the impacted tooth 14 can be generated in a desired direction. The magnetic portion 22 may e.g. comprise or be formed by an above-discussed magnet that is adhered to, snapped-in and/or at least partially received in a receiving portion of the base portion 18. Accordingly, the base portion 18 comprises a first face 52 (see Fig. 2) that is complementarily shaped and attaches the tooth 14 and a second face comprising the receiving portion (see Fig. 2 and 3) for receiving a magnet 54 forming the magnetic portion 22.

Accordingly, the magnetic portion 22 can be stacked on top of the base portion 18 and/or can be received in a part of the base portion 18 that faces away from the impacted tooth 14. In one example, the magnetic portion 22 can be or can comprise an orthodontic magnet 54 comprising a magnetic or magnetisable material, such as Ti, Fe or stainless steel.

Accordingly, as a general aspect of this disclosure that is not limited to the depicted embodiments, only one of the first and second magnet members 12, 50 disclosed herein may comprise or resemble a permanently magnetic material, whereas the respective other one of the first and second magnet member 12, 50 may comprise a magnetisable material. Alternatively, both of the first and second magnet members 12, 50 may comprise a permanently magnetic material, e.g. with a mutually attracting or repulsing polarity.

The base portion 18 and specifically its first face 52 is adapted to the geometry of the impacted tooth 14 and specifically to the predetermined area of the impacted tooth 14 to which it is supposed to be attached. In the shown example, this predetermined area comprises an incisal edge of the impacted tooth 14. The base portion 18 is, figuratively speaking, molded over said incisal edge and/or comprises a slot-like recess 24 receiving a part of the incisal edge and thus surrounds a small section of both of a labial and lingual face of the impacted tooth 14. In Figure 2, the slot-like recess 24 is obstructed by the modelled impacted tooth 14, but its position is nevertheless indicated with a respective reference sign.

The first magnetic member 12 further comprises a protrusion 13 forming an engagement structure for a below-discussed scan body and/or a below discussed positioning template 32. The orientation of said protrusion 13, which may also be referred to as a notch, is deliberately chosen, e.g. so as to determine and maintain a relative orientation to the scan body and/or positioning template 32. For example, the protrusion 13 may act as a rotation-lock mechanism for the scan body and/or positioning template 32.

Figure 2 also shows a positioning template 32 that can be used during implantation of the first magnetic member 12 in the oral cavity. As previously discussed, the positioning template 32 can be used to position the first magnetic member 12 appropriately relative to the impacted tooth 14 and hold it in said position until it is reliably bonded thereto with a sufficient strength. Afterwards, the positioning template 32 is removed from the oral cavity.

The positioning template 32 comprises a first portion 34 that is complementary shaped to and receives part of the first magnetic member 12, said part e.g. comprising the magnetic portion 22. Specifically, at least the second face of first magnetic member 12 facing away from the impacted tooth 14 as well as a section of the first magnetic member 14 extending from said second face and up to the protrusion 13 are received in said first portion 34. Also, the protrusion 13 is at least partially received in the first portion 34, e.g. with its underside facing away from the impacted tooth 14. This way, the protrusion 13 is also used as a positioning feature when positioning the first magnetic member 12 relative to and within the positioning template 32 and/or relative to the impacted tooth 14.

The positioning template 32 further comprises two second portions 36, each of which is complementary shaped to and partially receives part of one of the teeth 16 that are directly adjacent to the impacted tooth 14. Put differently, these directly adjacent teeth 16 directly enclose the impacted tooth 14 between them along the dental arch without any further intermediate teeth being present.

The positioning template 32 further comprises a lower face 38 facing away from the impacted tooth 14. A pressing force may e.g. manually be applied to said lower face 38 or to the positioning template 32 in general to reliably press the positioning template 32 against the teeth 16 and first magnetic member 12 until adhering or otherwise bonding the latter to the tooth 14 has been completed.

In this manner, the positioning template 32 can be reliably positioned relative to the dental arch and thus relative to the impacted tooth 14 in a predetermined manner. Because the first magnetic member 12 is reliably positioned within and relative to the positioning template 32 in a predetermined manner, it can be accurately positioned relative to the dental arch and the impacted tooth 14 in a predetermined manner as well. Put differently, the position of the first magnetic member 12 is accurately set with respect to all spatial degrees of freedom by the positioning template 32.

The positioning template 32 may thus facilitate the placement of the first magnetic member 12 by a surgeon, who applies the template during the procedure. As the surgeon might not directly be involved in the treatment planning process and may not have specialized orthodontic knowledge, the template 32 can assist in positioning the first magnetic member 12 in accordance with the predefined treatment plan, said plan e.g. including the trajectory computed in S2 above, even though the surgeon might not be involved in generating said treatment plan. Accordingly, by providing a predetermined placement reference, the positioning template 32 may reduce the need for additional communication or manual adjustments during the procedure.

The positioning template 32 can also be manufactured based on the virtual models of the above steps S1 and S2. It may be produced according to any of the disclosed techniques usable for producing at least the base portion of first magnetic member 12. In the depicted example, the positioning template 32 is produced by 3D-printing.

Figure 3 shows the oral cavity of a patient in which an upper dental arch 40 comprises the impacted tooth 14 that has been modelled in Figure 2. A lower dental arch 42 is depicted as well. The impacted tooth 14 is obstructed because it is below the gum level. In the depicted state, it has already been surgically exposed and the first magnetic member 12 has been attached thereto with help of the already removed positioning template 32. The surgical cut has partially been closed with help of stitches. As a result, the first magnetic member 12 and at least its magnetic portion 22 partially protrudes beyond the gum level into the oral cavity. The impacted tooth 14 remains at least initially still fully or at least largely below of the gum level 14. As depicted in Figure 3, the protruding part of the first magnetic member 12 is fully exposed within the oral cavity, but could also be entirely below of the gum level.

Figure 4 shows a subsequent state in which a dental aligner 46 has been applied to the upper dental arch 40. This dental aligner 46 has a common design to a certain degree, in that it extends along the upper dental arch 40 while partially encapsulating and/or closely surrounding the exposed crowns of the teeth of the upper dental arch 40 in a generally known manner. Yet, opposite the impacted tooth 14, the dental aligner 46 is not complementary shaped to said tooth 14 and/or is not geometrically adapted to physically receiving and/or encapsulating said tooth 14. Rather, it comprises a recess 48 that is configured as an open elongated slot and whose closed bottom face lies essentially opposite to the impacted tooth 14. In said recess 48, a second magnetic member 50 is provided and faces the first magnetic member 12. For example, the second magnetic member 50 is attached to and/or is at least partially embedded in a material of the recess 48 and in particular its bottom surface.

The second magnetic member 50 is positioned and/or oriented so as to generate magnetic forces in interaction with the first magnetic member 12 in a desired predominant direction. In the shown example, said forces include magnetic attraction forces. At least one of the first magnetic member 12 and second magnetic member 50 can thus comprise a permanently magnetic material. The respective other one of the first magnetic member 12 and second magnetic member 50 can likewise comprise a permanently magnetic material or a magnetizable material.

In the depicted state of Figure 4, the impacted tooth 14 has already begun to partially erupt. This eruption movement is directed by the generated magnetic forces as it progresses, so that the impacted tooth 14 assumes a desired position and/or orientation. It is noted that this may not resemble the eventual ideal position and/or orientation, i.e. the orthodontic target state. This state can be further approached with a successive treatment after having removed the first and second magnetic members 12, 50 and e.g. applying a respectively individualized common aligner or any other orthodontic device. This aligner may also receive the then e.g. fully erupted and initially impacted tooth 14.

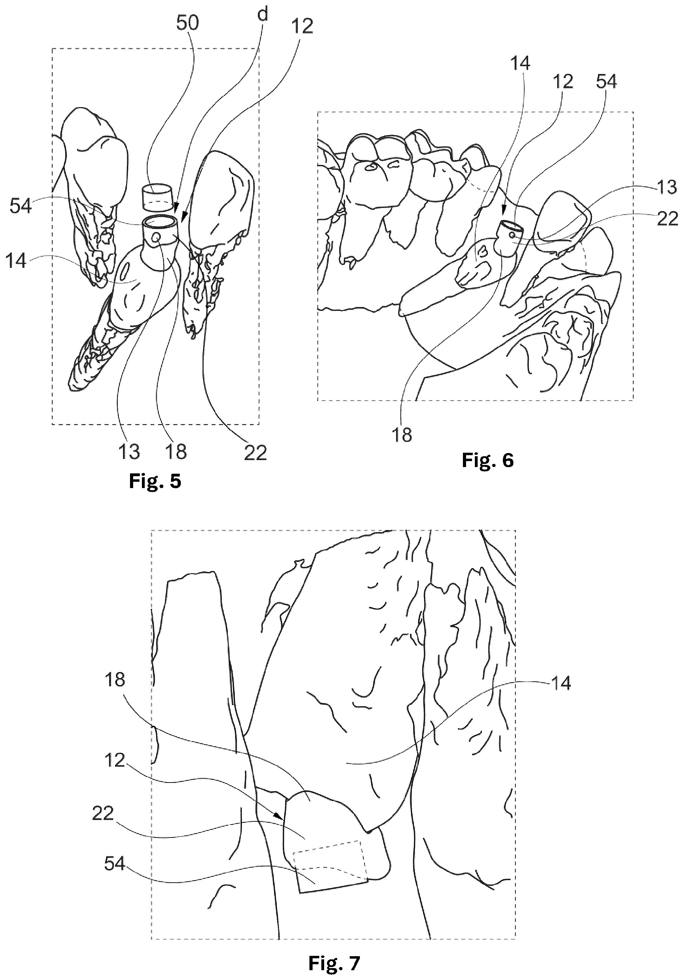

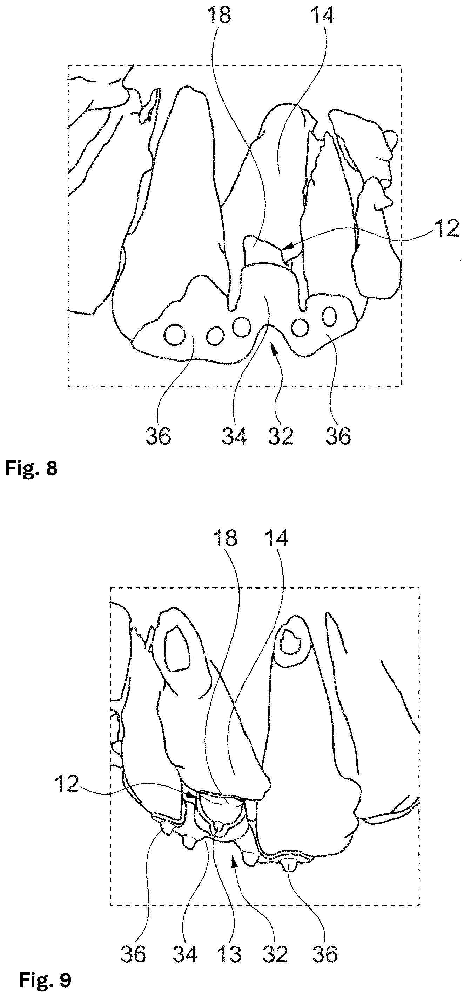

Figs. 5 to 9 show parts of the orthodontic arrangement (Figs. 5 to 6) and parts of the orthodontic arrangement plus a corresponding positioning template 32 (Figs. 8 and 9) during computer assisted planning of the orthodontic arrangement, set and patient treatment process, or in other words during a computer-implemented method. The virtual models shown in Figs. 5 to 9 also help to understand the structural configuration and described features of the physical orthodontic arrangement and/or set, or at least of parts thereof, according to embodiments disclosed herein.

More precisely, Figs. 5 to 9 show partial views of a virtual model of a patient's oral anatomy and a virtual model of parts of the orthodontic arrangement (Figs. 5 to 9) and positioning template 32 (Figs. 8 and 9). In Figs. 5 to 9 same features are referenced with same reference signs as in Figs. 2 to 4.

Figs. 5 to 7 show different views of a virtual model of a first magnetic member 12 that is virtually planned and configured for an individual treatment of a patient, namely for repositioning an impacted tooth 14 based on the given oral anatomy of the patient. The shown first magnetic member 12 has a customized base portion 18 that is shaped to conform to the impacted tooth 14 so as to be securely attachable to the impacted tooth 14. The first magnetic member 12 further comprises a, here cylindrically shaped, magnetic portion 22 with a cylindrical magnet 54 received therein. The customized base portion 18 is formed integrally with the magnetic portion 22, wherein the magnet 54 is formed separately but is fixedly attached to the magnetic portion 22. A protrusion or notch 13 is formed on and projects from the first magnetic member 12, more precisely from the magnetic portion 22.

The attachment position of the first magnetic member 12 on the impacted tooth 14, as well as its orientation, extension, angulation, dimension, shape and/or geometry - as a combination of the base portion 18 and the magnetic portion 22 - is planned and specified by the software depending on the oral anatomy of the patient and under consideration of a second magnetic member 50 provided in a removable orthodontic appliance (not shown in Figs. 5 to 7).

As shown in Fig. 5, the magnet 54 of the first magnetic member 12 and the second magnetic member 50 (which can be a magnet arranged in the removable orthodontic appliance) may be arranged opposite to and aligned with each other, wherein a specific initial distance d between the magnets is provided. The distance d between the magnets is closed during the treatment process by at least moving the impacted tooth 14 via magnetic force and thus along a desired trajectory. At the latest when the distance has been closed, the removable orthodontic appliance is replaced by another removable orthodontic appliance also comprising a magnetic member and a new distance is created between the magnets. This can be repeated until the initially impacted tooth has reached its desired position and orientation (as desired by the planned treatment process).

By means of the virtual model, a treatment process and the required physical arrangements can be determined. The physical first magnetic member 12 can be manufactured based on the shown virtual model, e.g. by additive manufacturing or other manufacturing methods. Thus, a physical first magnetic member can be provided that is precisely attachable to the real impacted tooth in a predetermined manner and with predetermined and desired orientation, dimension, angulation, etc. to support optimal treatment.

Figs. 8 and 9 show different views of a virtual model of a first magnetic member 12 and a corresponding positioning template 32 for precisely positioning and attaching the first magnetic member 12 to the impacted tooth 14. The positioning template 32 is virtually planned and configured based on the planned configuration of the first magnetic member 12 and the given oral anatomy of the patient.

The positioning template 32 comprises a first portion 34 configured to securely contact and support the first magnetic member 12 when attaching it to the first tooth 14. To this, the first portion 34 is here formed to partially receive the first magnetic member 12 and to at least partially engage its protrusion or notch 13 so as to determine and maintain a relative orientation of the first magnetic member 12 and the positioning template 32.

The shown positioning template 32 further comprises two second portions 36 adjacent to and integrally formed with the first portion 34, which is provided between the two second portions 36. The two second portions 36 each have a shape complementary to parts of one further tooth of the patient, respectively, so as to be arrangeable in a predetermined manner relative to the patient's oral anatomy.

Consequently, by positioning the positioning template 32 in a predetermined manner relative to the patient's oral anatomy via attaching the two second portions 36 to the further teeth, the first magnetic member 12 arranged in a predetermined position and orientation on the positioning template 32 via first portion 34 can be attached to the impacted tooth 16 in a predetermined manner. This is virtually planned as shown in Figs. 8 and 9.

In other words, the virtual modelling provides the structural configuration of the positing template 32 and first magnetic member 12 based on the patient's oral anatomy and the desired treatment so that the positing template 32 and first magnetic member 12 can be manufactured based on the virtual model and can subsequently be used for the described treatment of the patient.

## Claims

1. An orthodontic arrangement (10), comprising:
• a first magnetic member (12) configured to be attached to an impacted first tooth (14) of a patient and comprising a customized base portion (18) that is shaped to conform to at least a portion of the first tooth (14),
• a removable orthodontic appliance (46) adapted to an anatomy of the patient; and
• a second magnetic member (50) that is attached to the removable orthodontic appliance (46),
wherein the first and second magnetic members (12, 50) are configured to magnetically interact with one another to exert a force on the first tooth (14).

2. The orthodontic arrangement (10) of claim 1,
wherein the removable orthodontic appliance (46) is configured to cover at least a portion of a dental arch (40, 42) of the patient, the dental arch (40, 42) comprising the first tooth (14).

3. The orthodontic arrangement (10) of claim 1 or 2,
wherein the second magnetic member (50) is configured to face the first magnetic member (12) and/or to face at least one surface of the first tooth (14).

4. The orthodontic arrangement (10) of any of the previous claims,
wherein the second magnetic member (50) is at least partially exposed, in particular in a region facing the first magnetic member (12) and/or facing at least one surface of the first tooth (14).

5. The orthodontic arrangement (10) of any of the previous claims,
wherein the removable orthodontic appliance (46) comprises a first recess (48) in which at least a part of the second magnetic member (50) is received,
in particular wherein the second magnetic member (50) is attached to a bottom surface of the first recess (48).

6. The orthodontic arrangement (10) of any of the previous claims,
wherein the first magnetic member (12) is configured to be attached to an incisal occlusal, buccal, or palatal surface of the first tooth (14), or to a dental crown of the first tooth (14); and/or
wherein the first magnetic member (12) comprises a magnetic portion (22) supported by the base portion (18), in particular wherein the magnetic portion (22) has a non-customized shape, in particular a cylindrical or quadrangular shape.

7. The orthodontic arrangement (10) of any of the previous claims,
wherein the base portion (18) comprises a number of through holes (20) and/or comprises a roughened surface area and/or a microstructured surface area for receiving a dental fixation substance; and/or
wherein the base portion (18) is configured to receive at least a part of the first tooth (14) by comprising a slot (24) or another portion shaped complementary to at least a portion of the first tooth (14).

8. The orthodontic arrangement (10) of any of the previous claims,
wherein for engaging with a positioning template (32) and/or a scan body the first magnetic member (12), and in particular its base portion (18), comprises at least one protrusion (13) or another engagement structure.

9. A set, comprising:
- at least the base portion (18) of or for a first magnetic member (12) of an orthodontic arrangement (10) according to any of claims 1-8; and
- a positioning template (32),
wherein the positioning template (32) comprises:
• a first portion (34) configured to support the base portion (18) when attaching it to the first tooth (14);
• at least one second portion (36) that is rigidly connected to first portion (34) and that has a shape complementary to at least one further tooth (16) of the patient, such that it is arrangeable in a predetermined manner relative to the further tooth (16).

10. A set, comprising:
- a first magnetic member (12) configured to be attached to an impacted first tooth (14) of a patient; and
- a plurality of orthodontic appliance systems, wherein each of the plurality of orthodontic appliance systems comprises
o a removable orthodontic appliance (46) adapted to a geometry of a plurality of teeth (14, 16) and at least a portion of which is configured to contact the teeth (14, 16) for exerting force, and
o a magnetic member (50) that is attached to the dental removable orthodontic appliance (46),
wherein said orthodontic appliance systems differ from another at least with respect to their magnetic members (50);
wherein the first magnetic member (12) and each magnetic member (50) of the orthodontic appliance systems are configured to magnetically interact with one another to exert a force on the first tooth (14).

11. Magnetic member (12) for attaching to an impacted tooth (14),
the magnetic member (12) comprising a base portion (18) and a magnetic portion (22) supported by the base portion (18), wherein the base portion (18) is complementary shaped to a portion of the impacted tooth (14) to which it is supposed to be attached.

12. Positioning template (32), comprising:
- a first portion (34) configured to support the first magnet member (12) when attaching the first magnet member (12) to an impacted tooth (14);
- at least one second portion (36) that is rigidly connected to the first portion (34) and that has a shape complementary to at least one further tooth (16) of the patient, such that it is arrangeable in a predetermined manner to relative to the further tooth (16).

13. Method for manufacturing a magnetic member (12) for attaching to an impacted tooth (14), the magnetic member (12) comprising a base portion (18) and a magnetic portion (22) supported by the base portion (18), wherein the method comprises:
providing the base portion (18) with a complementary shape to a portion of the impacted tooth (14).

14. Method for manufacturing a removable orthodontic appliance (46),
wherein the removable orthodontic appliance (46) is adapted to an anatomy of a patient, wherein the method comprises:
attaching a magnetic member (12) to the removable orthodontic appliance (46), so that the magnetic member (12) is configured to face towards a dental arch (40, 42) of the patient.

15. Computer-implemented method for planning and/or supporting correction of an impacted tooth and/or for determining an attachment area and/or an orientation for a first magnetic member, the method comprising:
- generating a virtual model of at least part of a patient's oral anatomy including an impacted first tooth and at least one of adjacent teeth, gum and surrounding bone structures;
- determining a planned movement trajectory for the impacted first tooth, the trajectory being based at least on an initial position and/or orientation of the impacted first tooth and a predefined final target position and/or orientation of the impacted first tooth;
- determining an attachment area and an orientation, angulation, extension, dimension, geometry and/or shape for a first magnetic member based on the planned movement trajectory and, preferably, the virtual model, including designing a base portion of the first magnetic member, the base portion being shaped to conform to at least a portion of the impacted tooth in accordance with and/or when assuming the determined attachment area and orientation, angulation, extension, dimension, geometry and/or shape.
